# EUROPÄISCHE PATENTANMELDUNG

(11) **EP 0 593 108 A1**
(43) Veröffentlichungstag der Anmeldung: **20.04.1994**
(21) Anmeldenummer: 93202610.7
(22) Anmeldetag: 07.09.1993
(51) Int. Cl.: F16L 29/00, F16L 37/30

(54) **Rohrkupplungsanordnung**

(30) Priorität: 14.10.1992 DE 4234540
(71) Anmelder: METALLGESELLSCHAFT AG, D-60323 Frankfurt am Main (DE)
(72) Erfinder: Brehm, Lothar, D-60598 Frankfurt am Main (DE); Heinz, Günter, D-65618 Selters-Eisenbach (DE)

(57) **Zusammenfassung**

Die Kopplungsanordnung dient dem lösbaren Verbinden zweier Rohrstutzen (1a,1b). Die einander gegenüberliegenden Endbereiche der beiden Rohrstutzen sind jeweils mit einem schwenkbaren Deckel (2a,2b) verschlossen. Die beiden Deckel sind so geformt, daß sie in der Kopplungslage der Rohrstutzen ineinanderpassen. Jeder Deckel ist um eine Achse (6,7) innerhalb der Rohrstutzen schwenkbar, wobei sich die durch die Achsen gelegten Linien (Achslinien) in der Kopplungslage zu einer Achslinie vereinigen. Vorzugsweise sind die beiden Deckel in der Kopplungslage in einen Rohrstutzen hinein verschiebbar ausgebildet.

## Beschreibung

Die Erfindung betrifft eine Kopplungsanordnung zum lösbaren Verbinden zweier Rohrstutzen, deren einander gegenüberliegende Endbereiche jeweils mit einem schwenkbaren Deckel verschlossen sind.

Bei der Herstellung von Arzneimitteln, aber nicht nur hierbei stellt sich die Aufgabe, zwei Behälter oder Rohrstutzen so miteinander zu koppeln, daß die Umgebungsluft nicht in den Bereich innerhalb des Behälters oder der Rohrstutzen gelangen kann. Bei diesem Koppeln oder Andocken soll das Arbeiten in einem evakuierten Raum vermieden werden. Bei der eingangs genannten Kopplungsanordnung ist deshalb die Aufgabe gestellt, auf einfache Weise den Zutritt von Umgebungsluft in das Innere der Rohrstutzen zu vermeiden, wenn die Rohrstutzen gekoppelt sind und die Deckel geöffnet werden.

Erfindungsgemäß wird die Aufgabe dadurch gelöst, daß die beiden Deckel in der Kopplungslage der Rohrstutzen ineinanderpassend geformt sind und daß jeder Deckel um eine Achse innerhalb der Rohrstutzen schwenkbar ist, wobei sich die durch die Achsen gelegten Linien (Achslinien) in der Kopplungslage zu einer Achslinie vereinigen. Hierbei werden die Deckel in der Kopplungslage zu einer gemeinsam schwenkbaren Einheit zusammengefügt. Nachdem die beiden Rohrstutzen bei geschlossenem Deckel miteinander gekoppelt sind, können dann die Deckel verschwenkt und die Rohrstutzen geöffnet werden. Dadurch wird ein Durchlaß zwischen den Rohrstutzen frei, durch welchen Material, z.B. körnige Feststoffe oder Flüssigkeiten, von einem Rohrstutzen in den Bereich des anderen Rohrstutzens und damit in einen anderen Behälter übertreten können. Auf diese Weise können innerhalb der Rohrstutzen sterile Bedingungen unverändert aufrechterhalten werden.

Um die sterilen Bedingungen weiter zu vervollkommnen, wird mindestens ein Deckelrand mit einer Dichtung versehen, die in der Kopplungslage der Rohrstutzen am anderen Deckel anliegt. Damit bleibt während der Kopplung auch der kleine Raum zwischen den Außenseiten der Deckel abgeschlossen, so daß in diesem Raum enthaltene Keime oder Verunreinigungen in einen steril zu haltenden Bereich nicht gelangen können.

Ausgestaltungsmöglichkeiten der Kopplungsanordnung werden mit Hilfe der Zeichnung erläutert. Es zeigt:
- Fig. 1a: einen Längsschnitt durch den oberen Rohrstutzen mit geschlossenem Deckel,
- Fig. 1b: einen Längsschnitt durch den unteren Rohrstutzen mit geschlossenem Deckel,
- Fig. 2: einen Längsschnitt durch die beiden gekoppelten Rohrstutzen der Fig. 1a und 1b mit von ihren Deckelsitzen abgehobenen Deckeln,
- Fig. 3: einen Längsschnitt, geschnitten entlang der Linie A-A in Fig. 2, durch die von ihren Deckelsitzen abgehobenen Deckel,
- Fig. 4: einen Längsschnitt durch die gekoppelten Rohrstutzen gemäß Fig. 1a, 1b und 2 mit verschwenkten Deckeln,
- Fig. 5: eine Einzelheit der Schwenkvorrichtung für die gemäß Fig. 2 und 3 ineinandergepaßten Deckel,
- Fig. 6: den Bereich der Deckelsitze im Längsschnitt in vergrößerter Darstellung zum Verdeutlichen der Anordnung von Dichtungen und
- Fig. 7: eine Variante der Ausgestaltung einer Durchführung der Tragstangen durch den zugehörigen Gehäuseteil.

Fig. 1a zeigt im Längsschnitt den oberen Rohrstutzen (1a), der zu einem Gehäuse oder Rohr (1) gehört. Der Rohrstutzen (1a) ist an seinem unteren Ende durch einen Deckel (2a) verschlossen. Der Deckel (2a) hat einen kreisförmigen Rand (3a), mit dem er sich am Rohrstutzen auf einem passenden Deckelsitz (4a) abstützt, der sich nach unten konisch verengt. Der Deckel (2a) ist an einer Tragstange (5) schwenkbar befestigt, wobei die Einzelheiten des Bewegens und Verschwenkens des Deckels (2a) weiter unten erläutert werden. Die Achslinie, um welche der Deckel (2a) schwenkbar ist, steht senkrecht auf der Zeichenebene der Fig. 1a auf dem durch das Kreuz (6) markierten Punkt.

Die Tragstange (5) ist durch die Wand des Rohrstutzens (1a) abgedichtet herausgeführt und mit einer Querstange (13) verbunden, die wiederum mit einer Schubstange (14) verbunden ist. Die Schubstange wird in zwei Ösen (15) und (16) geführt, die am Rohrstutzen befestigt sind. Eine Druckfeder (17) zieht die Schubstange (14) und damit die Tragstange (5) und den Deckel (2a) in die in Fig. 1a dargestellte Schließlage.

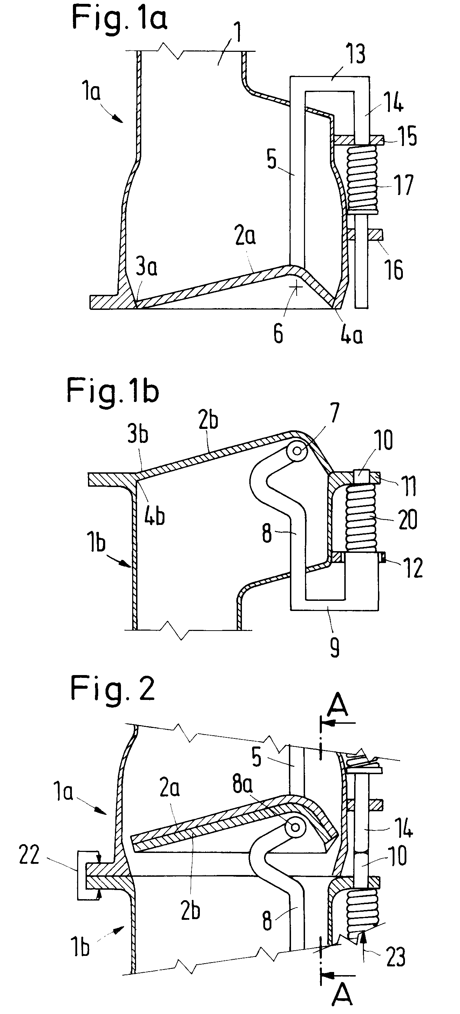

Der Deckel (2a) des Rohrstutzens (1a) hat eine asymmetrisch gekrümmte Form, so daß der Deckel (2b) des unteren Rohrstutzens (1b) - vgl. Fig. 1b - teilweise in den Deckel (2a) hineinpaßt. Nach dem äußeren Zusammenkoppeln der beiden Rohrstutzen (1a) und (1b), vgl. z.B. Fig. 2, sitzen auch die beiden Deckel ineinander, da sie zusammenpassend geformt sind. Weitere Einzelheiten werden weiter unten erläutert.

Der Deckel (2b) - vgl. Fig. 1b - ist um eine Achse (7) schwenkbar ausgebildet, diese Achse (7) ist an einer gebogenen Tragstange (8) schwenkbar befestigt. Die Tragstange (8) ist durch die Wand des Rohrstutzens (1b) abgedichtet hindurchgeführt und über eine Querstange (9) mit einer Schubstange (10) verbunden. Die Schubstange verläuft in zwei mit dem Rohrstutzen (1b) verbundenen Ösen (11) und (12). Eine die Schubstange (10) umgebende Druckfeder (20), die sich an der Öse (11) und am Ansatz der Querstange (9) abstützt, zieht den Deckel (2b) in die in Fig. 1b dargestellte Schließlage. Dabei stützt sich der Deckel mit seinem kreisförmigen Rand (3b) an einem passenden Deckelsitz (4b) ab, dessen größter Durchmesser so groß ist wie der kleinste Durchmesser des Deckelsitzes (4a) des Rohrstutzens (1a) - vgl. Fig. 1a.

Die Rohrstutzen (1a) und (1b) können zusammengeführt und von außen lösbar zusammengeklemmt werden. In den Fig. 2 bis 4 ist diese Kopplungslage der Rohrstutzen (1a) und (1b) in verschiedenen Phasen dargestellt. In Fig. 2 ist eine lösbare Klemmvorrichtung (22) schematisch angedeutet, bei der es sich z.B. um eine Verschraubung handeln kann, die an Vorsprüngen der Rohrstutzen angreift.

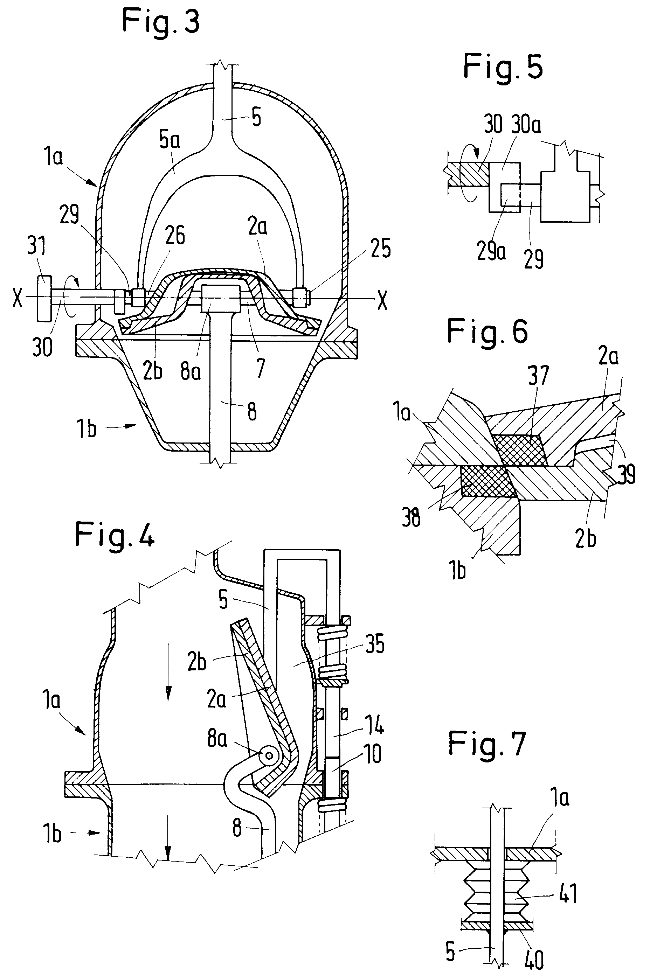

In der Kopplungslage, vgl. Fig. 2, berühren sich die Schubstangen (10) und (14). Durch den Druck, den eine Bedienungsperson auf die Schubstange (10) in Richtung des Pfeils (23) ausübt werden die Tragstangen (5) und (8) ebenfalls nach oben in Richtung des Pfeils (23) bewegt, wodurch die beiden Deckel (2a) und (2b) von ihren Deckelsitzen abgehoben werden. Dadurch entsteht die in Fig. 2 und 3 dargestellte Lage der beiden Deckel, von der aus sie gemeinsam verschwenkt werden können. In Fig. 3 sind die mit dem oberen Deckel (2a) verbundenen Achszapfen (25) und (26) zu sehen, die mit dem Gabelende (5a) der Tragstange (5) schwenkbar verbunden sind. Mit dem unteren Deckel (2b) ist die Schwenkachse (7) verbunden, die vom Kopf (8a) der Tragstange (8) umgriffen wird.

Spätestens in der in Fig. 2 und 3 dargestellten, vom Sitz abgehobenen Lage der ineinandergreifenden Deckel (2a) und (2b) fallen deren Achslinien zu einer gemeinsamen Achslinie (X-X) zusammen. Jetzt können die beiden Deckel (2a) und (2b) von einer Bedienungsperson mit Hilfe einer Schwenkstange (30) mit Handgriff (31) verschwenkt werden. Die Schwenkstange (30) greift hierbei in den Achszapfen (26) des Deckels (2a) ein. Zu diesem Zweck weist der Achszapfen (26) einen geschlitzten Fortsatz (29) auf. In Fig. 5 ist der Fortsatz (29) mit seinem geschlitzten Ende (29a) im Längsschnitt vergrößert dargestellt. Das vordere Ende der Schwenkstange (30) weist einen verbreiterten, beilartigen Fortsatz (30a) auf, dieser Fortsatz (30a) greift stets in den Schlitz (29a) ein, wobei der Schlitz (29a) dann senkrecht steht, wenn die beiden Deckel (2a) und (2b) die in Fig. 6 dargestellte Schließlage einnehmen. Dadurch wird verhindert, daß die Schwenkstange (30) bei den möglichen Bewegungen der Deckel (2a) und (2b) außer Eingriff mit diesen Deckeln gerät.

Aus Fig. 4 ist ersichtlich, wie die von ihren Sitzen abgehobenen Deckel (2a) und (2b) nach dem Verschwenken mit Hilfe der Schwenkstange (30) in eine Lage gebracht sind, bei welcher sie den freien Durchgang des Materials von oben nach unten durch die beiden Rohrstutzen (1a) und (1b) möglichst wenig behindern. Zum Zwecke dieser geringen Behinderung des Materialdurchgangs ist die Ausbuchtung (35) am oberen Rohrstutzen (1a) angeformt, welche die verschwenkten Deckel (2a) und (2b) mindestens teilweise aufnimmt.

Fig. 6 zeigt in vergrößerter Darstellung die beiden verklammerten Rohrstutzen (1a) und (1b) mit den zusammengefügten Deckeln (2a) und (2b), währenddem sie noch den jeweiligen Rohrstutzen verschließen. Der obere Deckel (2a) ist am Rand mit einer Ringdichtung (37) versehen, die sowohl gegen den Rohrstutzen (1a) als auch gegen den unteren Deckel (2b) dichtend wirkt. Eine zweite Ringdichtung (38) sitzt so im oberen Bereich des unteren Rohrstutzens (1b), daß sie sowohl eine Dichtwirkung gegen den oberen Rohrstutzen (1a) als auch gegen den Deckel (2b) ausübt. Die Ringdichtung (37) ist zusätzlich dafür wichtig, daß der zwischen den Deckeln (2a) und (2b) verbleibende, mehr oder weniger schmale Raum (39) stets ausreichend abgedichtet verschlossen bleibt, solange sich die beiden Deckel (2a) und (2b) berühren, auch wenn die Deckel von ihren Sitzen (4a) und (4b) abgehoben und verschwenkt sind. Dadurch können Keime oder Verunreinigungen, die sich an den Deckeloberseiten und im Raum (39) befinden, nicht in das Innere der Rohrstutzen (1a) und (1b) gelangen. Für die Erzeugung möglichst steriler Bedingungen ist dies besonders wichtig.

Es kann sich empfehlen, die Durchführung der Tragstangen (5) und (8) durch die jeweilige Gehäusewand (1) so auszubilden, daß ein Gleiten zwischen der Stange und der Rohrstutzenwand vermieden wird. Gemäß Fig. 7 wird die Stange (5) mit einer Stützscheibe (40) fest verbunden, wobei sich auf der Stützscheibe ein elastischer Balg (41) (z.B. ein Metallbalg) abstützt, der mit der Wand des Rohrstutzens (1a) verbunden wird. Beim Bewegen der Tragstange (5) in Richtung ihrer Längsachse wird der Balg (41) gestaucht oder gedehnt. Hierdurch wird eine gasdichte und gleichzeitig elastische Durchführung der Stange (5) durch die Wand erreicht. Die gleiche Ausführungsform kann selbstverständlich auch für die Durchführung der Gehäusestange (8) gewählt werden.

## Patentansprüche

1. Kopplungsanordnung zum lösbaren Verbinden zweier Rohrstutzen, deren einander gegenüberliegende Endbereiche jeweils mit einem schwenkbaren Deckel verschlossen sind, dadurch gekennzeichnet, daß die beiden Deckel in der Kopplungslage der Rohrstutzen ineinanderpassend geformt sind und daß jeder Deckel um eine Achse innerhalb der Rohrstutzen schwenkbar ist, wobei sich die durch die Achsen gelegten Linien (Achslinien) in der Kopplungslage zu einer Achslinie vereinigen.

2. Kopplungsanordnung nach Anspruch 1, dadurch gekennzeichnet, daß die beiden Deckel in der Kopplungslage in einen Rohrstutzen hinein verschiebbar ausgebildet sind.

3. Kopplungsanordnung nach Anspruch 1 oder 2, dadurch gekennzeichnet, daß jede Achse eines Deckels mit einer Tragstange zusammenwirkt.

4. Kopplungsanordnung nach Anspruch 3, dadurch gekennzeichnet, daß die Tragstangen verschiebbar ausgebildet sind.

5. Kopplungsanordnung nach Anspruch 4, dadurch gekennzeichnet, daß mit jeder Tragstange eine Schubstange verbunden ist, wobei die beiden Schubstangen außerhalb der Rohrstutzen zusammenwirken.

6. Kopplungsanordnung nach einem der Ansprüche 1 bis 5, dadurch gekennzeichnet, daß ein Rohrstutzen eine Ausbuchtung zum Aufnehmen der geöffneten Deckel aufweist.

7. Kopplungsanordnung nach einem der Ansprüche 1 bis 6, dadurch gekennzeichnet, daß die Achse eines Deckels mit einer Schwenkvorrichtung zusammenwirkt, die von außen zu betätigen ist.

8. Kopplungsanordnung nach einem der Ansprüche 1 bis 7, dadurch gekennzeichnet, daß die Tragstangen jeweils mit einem elastischen Balg verbunden durch die Rohrstutzen hindurch nach außen geführt sind.

9. Kopplungsanordnung nach einem der Ansprüche 1 bis 8, dadurch gekennzeichnet, daß mindestens ein Deckelrand mit einer Dichtung versehen ist, die in der Kopplungslage der Rohrstutzen am anderen Deckel anliegt.
